# EUROPEAN PATENT SPECIFICATION

(11) **EP 3 117 192 B1**
(45) Date of publication and mention of the grant of the patent: **27.05.2020**
(21) Application number: 15715837.9
(22) Date of filing: 12.03.2015
(51) Int. Cl.: G01K 7/06

(54) **THERMOCOUPLE AND METHOD FOR MAKING THE SAME**
THERMOELEMENT UND VERFAHREN ZUR HERSTELLUNG DAVON
THERMOCOUPLE ET SON PROCÉDÉ DE FABRICATION

(30) Priority: 13.03.2014 IT GE20140024
(43) Date of publication of application: 18.01.2017
(73) Proprietor: Castfutura S.p.A., 24030 Terno d'lsola (Bergamo) (IT)
(72) Inventor: GIORGIO, Offredi, I-23851 Galbiate (LC) (IT); POZZI, Fabio, I-23801 Calolziocorte (LC) (IT)
(74) Representative: Karaghiosoff, Giorgio Alessandro
(86) International application number: PCT/IB2015/051813
(87) International publication number: WO 2015/136482

(56) References cited:
- GB-A- 832 975
- GB-A- 1 379 546
- GB-A- 1 578 867
- GB-A- 2 243 484
- US-A- 3 512 248
- US-A- 5 222 811
- US-A1- 2009 268 779

## Description

The present invention relates to a thermocouple comprising a first conductor element and a second conductor element, which first and second conductor elements are brought in electrically conductive contact at one detecting end, so called hot junction, obtained by joining a terminal of the first conductor element with a corresponding terminal of the second conductor element, such to generate at the two free ends of each conductor element, so called cold junction, a potential difference that is a function of the temperature detected at the detecting end.

Moreover the free ends of each one of the two conductor elements are connected each one to two corresponding transmission conductors, a first and a second transmission conductor respectively, for transmitting the electrical signal generated by the potential difference to a measuring means or to an electromagnet.

The arrangement just described is the common arrangement of a thermocouple known in the prior art.

The two conductor elements composing the hot junction are a positive one and the other is a negative one, with respect to a zero value, and the generated voltage is given by the algebraic sum thereof.

Such conductor elements are placed in contact by two ends thereof at the so called hot junction and if a temperature difference occurs at such junction it is possible to measure a potential difference at the free ends of said two conductors, the so called cold junction, which is a function of the temperature difference.

Thus thermocouples generally are used as temperature sensors and accordingly for flame monitoring in burners for household appliances also for burners placed in closed cavities such as for example cooking ovens.

The present invention generally relates to thermocouples for flame monitoring and particularly burners of cooking hobs.

Since thermocouples are widely used, the market is continuously asking for improvements thereof, particularly arrangements aiming at reducing the costs for making thermocouples while keeping their functionality and efficiency unchanged are required, in the several installation fields.

The aim of the present invention is to make a thermocouple having such arrangements, such to satisfy at best the different application requests of the market.

The present invention achieves the above aims by providing a thermocouple such as described above, wherein at least one of the two transmission conductors is made of aluminium.

In thermocouples known in the prior art the transmission conductors are composed of rod-like elements made of copper.

The fact of replacing copper with another metal, particularly aluminium, causes costs to be considerably reduced, while keeping the same operating efficiency of the thermocouple.

Advantageously at least one of the two transmission conductors is covered by an electrical insulating and protecting sheath.

According to a possible embodiment both the transmission conductors can be made of aluminium.

Thus it is possible to produce thermocouples for being used for flame monitoring in cooking hobs, with costs lower than the cost for thermocouples known in the prior art that use transmission conductors made of copper.

The use of aluminium is partly disclosed in the patent GB1379546.

However such patent only mentions the use of aluminium, in a general manner and in combination with a temperature measurement device, while the thermocouple is a potential difference measurement device that serves for activating or deactivating a valve.

The situations are completely different, the document mentioned does not deal at all with problems existing in the thermocouple field when a conductor made of aluminium is desired to be used and which are implied in the fact of having an extremely reliable mechanical and electrical connection, related to very low costs.

With a particular reference to the technical field of thermocouples, such devices are used for flame monitoring: once the flame is generated by operating the knob controlling the opening of the gas supplying valve, till the potential difference at the ends of the thermocouple has predetermined values, the valve of the gas cock controlled by the thermocouple is kept open, switch-on time, allowing gas to be supplied.

When the flame goes out, the potential difference at the ends of the thermocouple decreases, therefore the valve closes, switch-off time.

It is clear how thermocouples have to provide components able to transmit the electrical signal at such a speed to guarantee acceptable switch-on and switch-off time of the valve as regards the safety aspect.

In order to obtain, with the aluminium, acceptable values as regards the response time with respect to those obtained by using the copper, problems have to be solved which are not disclosed at all in the document GB1379546.

Document GB1379546 mentions the use of aluminium only in combination with compensation circuits, the technical problems of using aluminium as a replacement for copper are completely different and require problems to be solved in order to obtain components of the thermocouple that allow the desired switch-on and switch-off time to be reached.

Such problems are about a thermocouple that has to generate an operating voltage sufficient for operating the gas valve and not about the temperature measurement, as in the document GB1379546.

One of the problems related to thermocouples and to switch-on and switch-off speed is the thermic inertia of the material, that is the amount of energy to be provided for changing the temperature of the material.

The mass of the transmission conductor is related to thermal inertia, that is the higher the mass is the higher the thermic inertia and as the thermic inertia increases the switch-on and switch-off time of the thermocouple increases.

However the use of aluminium as the material for making the transmission conductor requires greater sections thereof in order to guarantee the transmission conductor to be properly fastened to the conductor element.

A greater section causes the mass to increase which leads to an increase of thermic inertia.

Therefore it is clear, in order to guarantee the same conductivity performances and the same mechanical strength as the copper, how the use of aluminium necessarily needs greater sections, this affects the mass of the thermocouple system that increases, increasing the thermic inertia that therefore requires expedients for maintaining the standards required by the market.

Such expedients can be carried out both on the transmission conductor made of aluminium and on the conductor element.

Therefore according to a possible embodiment of the thermocouple of the present invention, the transmission conductor made of aluminium has such a section and/or length to obtain a thermic inertia comparable with the thermic inertia of the copper.

Likewise also the conductor element can have such a section and/or length to give a conductivity and accordingly switch-on and switch-off time to the thermocouple of the present invention comparable with thermocouples known in the prior art, wherein copper is provided as the transmission conductor.

For example by comparing aluminium with copper, that is the material usually used in thermocouples known in the prior art, it is possible to find that aluminium requires a section greater than copper, by a value equal about to 30%, in order to guarantee the same electrical conductivity as copper.

The increase in the section causes thermic inertia to increase which increases switch-on and switch-off time.

In order to obtain switch-on and switch-off time comparable with those of the copper for example it is possible to decrease the thermic inertia of the thermocouple system by decreasing the section of at least one of the two conductor elements.

On the basis of the amount of the reduction of the thermic inertia it is possible to act on both the conductor elements.

The thermocouple of the present invention therefore allows inefficiencies related to the higher thermic inertia due to the use of aluminium to be compensated.

A second problem to deal with when using aluminium is the fastening of the transmission conductor made of aluminium to the conductor element.

As it will be clearly shown below, aluminium is a material difficult to weld, therefore it is necessary to give a sufficient mechanical strength to the thermocouple of the present invention.

According to the invention the thermocouple of the present invention provides the transmission conductor made of aluminium to be fastened to the corresponding conductor element through fastening means composed of a chemical-physical connection and a mechanical connection.

Therefore the force of the connection between the conductor element and the transmission conductor increases and also the electrical contact deriving from such connection improves.

Moreover also the life over time increases with respect to thermocouples known in the prior art, which is an aspect of primary importance since the thermocouple is a safety device and as such it has to guarantee a certain efficiency, wear resistance and life over time.

Further, according to the invention the mechanical connection is a form fit.

Also according to the invention, the free end of at least one of the two conductor elements provides a housing seat for the connection with the terminal of the corresponding transmission conductor or vice versa.

In the thermocouples known in the prior art the free end of the conductor element is connected to the transmission conductor through a welding made edge to edge by spot welding processes or preferably of the TIG type without filler material.

On the contrary according to the variant described the conductor element or the transmission conductor can be machined such to obtain a housing seat overlapping the transmission conductor or the conductor element respectively and it is welded by a process that can be spot welding, TIG welding without filler material or ultrasonic welding or another process suitable for obtaining a good mechanical strength of the welding joint.

Such connection method, allows a higher mechanical strength of the welding joint to be obtained compared with the system welding the two wires edge to edge.

Finally, according to the invention the housing seat is composed of a surface having a section complementary, at least partially, with the section of the terminal of the corresponding transmission conductor or conductor element.

Below some variant embodiments of such housing seat will be described.

The presence of the housing seat gives further advantageous aspects to the thermocouple of the present invention, since as mentioned above such connection method allows a joint with a higher mechanical strength to be obtained.

Moreover the connection method described and the need of increasing the section of the transmission conductor, described above with reference to the problem of thermic inertia, synergically cooperate in improving the electrical contact of the transmission conductor with the conductor element, giving switch-on and switch-off time of the thermocouple of the present invention that have acceptable values on the basis of the standard required by the market.

As mentioned above, moreover it is specified that currently the main difficulty for which the aluminium is not used, derives from the difficulty of welding the aluminium with respect to materials with a considerably higher melting point, such as iron, brass and copper usually used in the joints for electrical connection of thermocouples. Moreover the aluminium exhibits a quick formation of a film of oxide, alumina oxide, causing welding to be very difficult with the known welding systems usually used.

Alumina oxide is hard to be removed by the common deoxidizers used in flame welding, and, if it is not removed during the welding step, it does not allow the two materials to have a close connection which is necessary for obtaining a good mechanical and electrical joint. Even in the case of electric welding where it is not possible to use deoxidizers, such oxide makes it impossible for the two materials to have a close connection since it is interposed therebetween. Moreover the fact of joining two materials often of different nature having melting points that sometimes are very different is difficult to be carried out since when the aluminium reaches the melting point the other material has not reached it yet and the aluminium gets melted making welding impossible.

Such technical drawback for example may be solved by using a transmission conductor made of aluminium fastened to the corresponding conductor element by particular welding methods intended to eliminate the formation of alumina oxide or to limit the isolating power described above.

Therefore the aim of the present invention is also a method for making a thermocouple as described before, wherein the free end of at least one of the two conductor elements is welded to the end of the corresponding transmission conductor by ultrasonic welding.

Further welding methods are also possible, all falling within the present invention.

For example according to a first embodiment it is possible to provide magnetic pulse welding.

Such welding method, which is not used for welding components of small dimensions, as in the case of thermocouples, is known and clearly described in the document WO9823400.

As an alternative it is possible to provide to weld the transmission conductor to the conductor element by laser welding.

These and other characteristics and advantages of the present invention will be more clear from the following description of some embodiments shown in the annexed drawings wherein:
Fig.1 is a perspective view of the thermocouple of the present invention;
Fig.2 is a section of the thermocouple of the present invention along a longitudinal plane thereof, according to a possible embodiment;
Figs. 3a, 3b, 3c, 3d and 3e are several possible variants of the connection of a conductor element to the corresponding transmission conductor, belonging to the thermocouple of the present invention.

It is specified that the figures annexed to the present patent application show some possible embodiments, but such embodiments have to be intended merely for illustrative purpose and not as a limitation of the inventive concept of the present invention that is about making a thermocouple with at least one transmission conductor made of aluminium, as well as making a thermocouple and its components, such to keep a high efficiency thereof while reducing the production costs.

Particularly, according to a first embodiment, the thermocouple of the present invention comprises a first conductor element and a second conductor element, which are brought in electrically conductive contact at one detecting end, obtained by joining an end of the first conductor element with a corresponding end of the second conductor element, such to generate at the two free ends of each conductor element, a potential difference that is a function of the temperature detected at the detecting end.

The free ends of each one of said two conductor elements are connected each one to two corresponding transmission conductors 21 and 22.

Preferably at least one of the two transmission conductors 22 is covered by an electrical insulating and protecting sheath.

Moreover at least one of the two transmission conductors 21, 22 is made of aluminium.

Preferably both the transmission conductors 21 and 22 are made of aluminium.

As mentioned above the transmission conductors 21 and 22 can be fastened to the free ends of the conductor elements by ultrasonic welding.

As an alternative it is possible to provide any welding method, both magnetic pulse welding and laser welding.

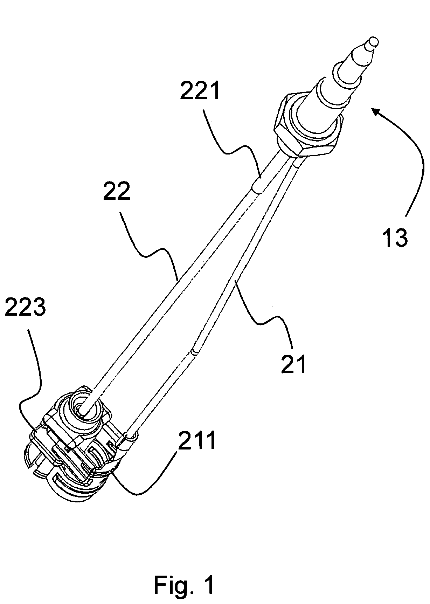

As mentioned above the invention mainly relates to thermocouples for flame monitoring in household appliances such as for example cooking hobs, such as clearly shown in figure 1.

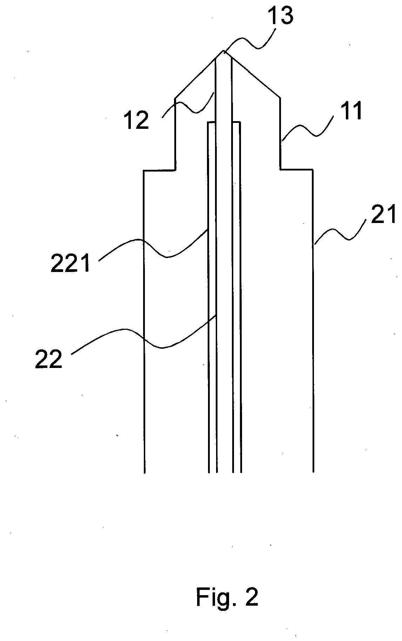

Particularly figures 1 and 2 show a possible embodiment of the arrangement of the thermocouple just described.

According to such variant embodiment the thermocouple comprises a first conductor element 11 and a second conductor element 12 of which the first conductor element 11 composed of a tubular element of a first metal and a second conductor element 12 composed of a rod-like element of a second metal.

The rod-like element 12 is fitted into the tubular element 11.

The hot junction is composed of a detecting end belonging to a detecting head 13, obtained by pressing the end of the first conductor element 11 against the corresponding end of the second conductor element 12.

According to the variant shown in the figures, the side surface of the detecting head 13 at least partially forms the first conductor element 11.

The rod-like element 12 is connected to a transmission conductor 22 covered by an electrical insulating and protecting sheath 221 while the tubular element 11 is connected to a transmission conductor 21 made of electrically conductive material.

With a particular reference to figure 1, the covered transmission conductor 22 ends by a terminal element 223, while the transmission conductor 21 ends by a further terminal element 211.

The two terminal elements 221 and 223 can be connected to measuring apparatuses or to an electromagnet for detecting the temperature at the detecting head 13, since the potential difference between the two terminals 211 and 223 is equal to the potential difference at the cold junction of the thermocouple, that is at the free ends of the conductor element 11 and of the conductor element 12.

According to a possible embodiment of the thermocouple of the present invention said at least one transmission conductor 22 made of aluminium is fastened to the corresponding conductor element 12 by fastening means composed of a chemical-physical connection and a mechanical connection.

Particularly the mechanical connection is a form fit.

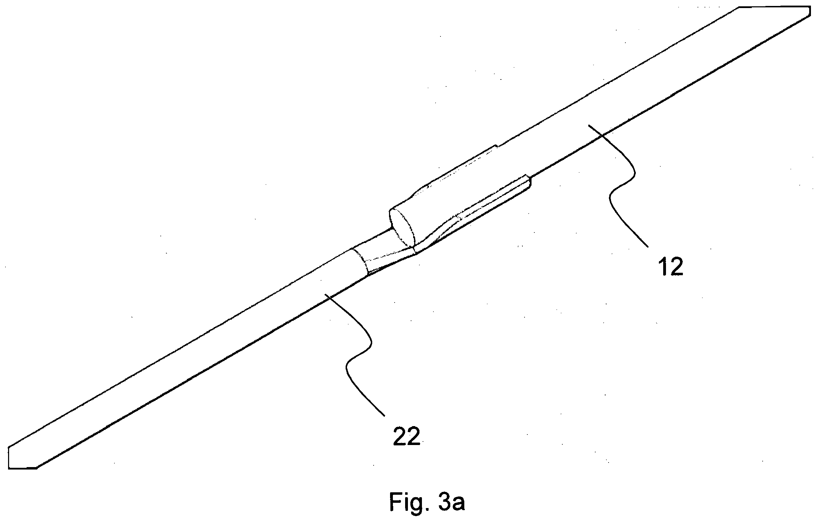

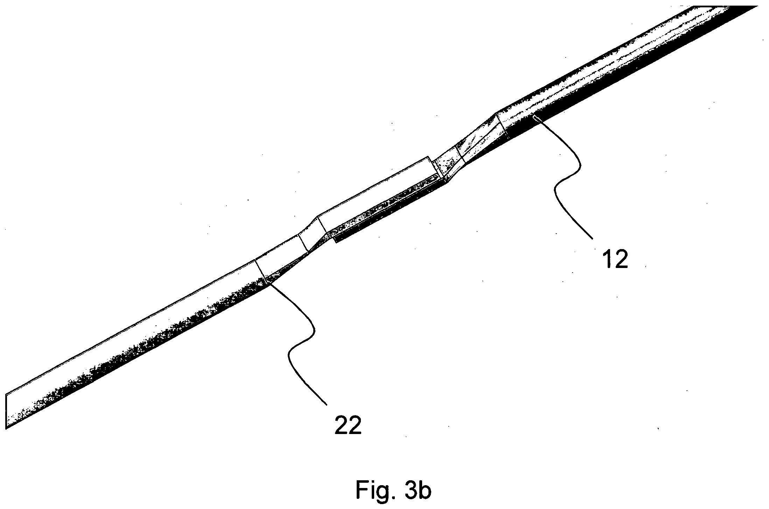

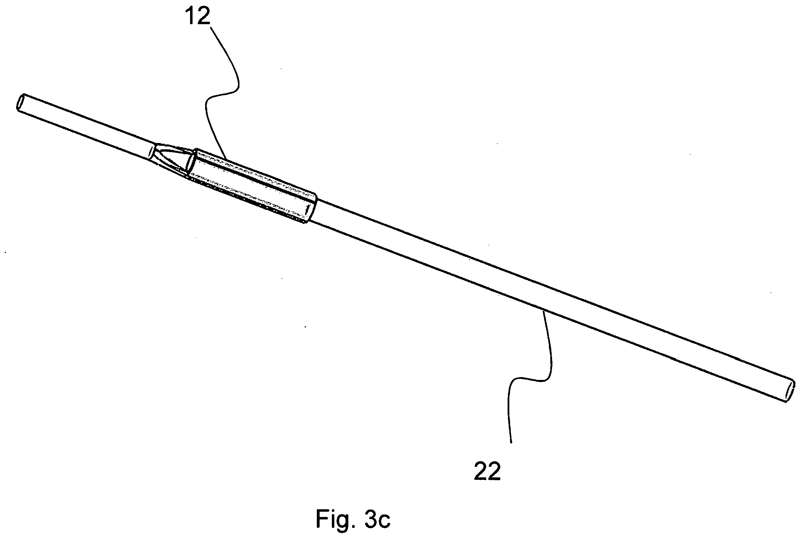

Figures 3a, 3b and 3c show a particular arrangement of the connection between the conductor element 12 and the transmission conductor 22.

According to one embodiment of the thermocouple of the present invention, it is possible to provide the free end of the conductor element 12 to have a housing seat for the connection with the terminal of the corresponding transmission conductor 22.

Obviously as in figure 3b the housing seat can be provided also on the terminal of the transmission conductor 22 such to house the free end of the conductor element 12.

Particularly the connection between the conductor element 12 and the transmission conductor 22 occurs by a form fit.

Preferably the housing seat is composed of a surface having a section complementary, at least partially, with the section of the terminal of the corresponding transmission conductor 22, or vice versa.

For example in the specific case of figure 3a the terminal of the transmission conductor 22 has been machined such to house the conductor element 12, generally made of constantan.

The terminal of the transmission conductor 22 has a convex surface intended to house the external concave surface of the constantan wire 12.

Thus the encumbrance of the constantan 12-transmitting conductor 22 joint is reduced, which can be coated by the insulating sheath 221 and fitted into the detecting head 13.

The constantan wire 12 is preferably made with a semicircular pressed portion to be welded on the transmission conductor 12.

As an alternative the constantan wire 12 can be made with a flat pressed portion to be welded on the transmission conductor 22 composed of a wire of a round bar or it also having a flat pressed portion, such as shown in figure 3b.

As mentioned above the housing seat can be provided both on the transmission conductor 22 and on the conductor element 12.

Figure 3c shows a possible arrangement for the connection between the conductor element 12 and the transmission conductor 22, wherein the housing seat is provided on the conductor element 12.

With a particular reference to figure 3c, the conductor element 12 completely covers the terminal portion of the external surface of the transmission conductor 22.

Moreover the connection can be made according to a further embodiment, that is by bringing the two materials in contact edge to edge and by using a bushing that surrounds the external surfaces of the terminal portions in contact of the transmission conductor 22 and of the conductor element 12.

Finally it is specified that the figures just described are about the connection between the conductor element 12 and the transmission conductor 22, but, as mentioned above, such embodiments can be provided for any transmission conductor 21, 22 and conductor element 11, 12.

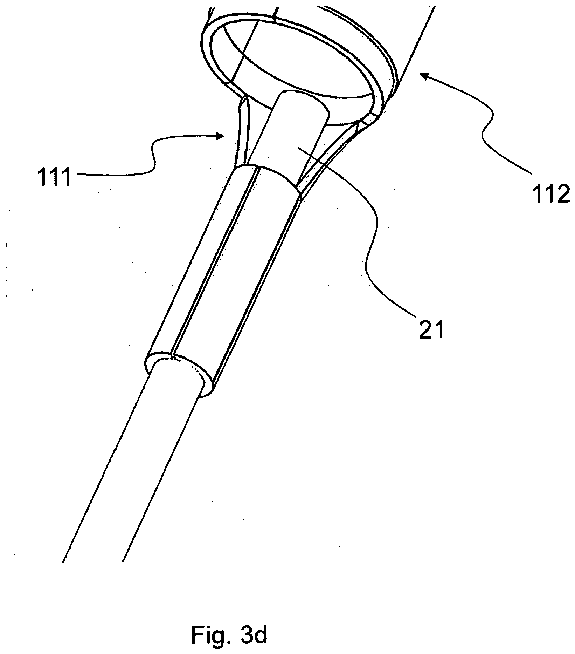

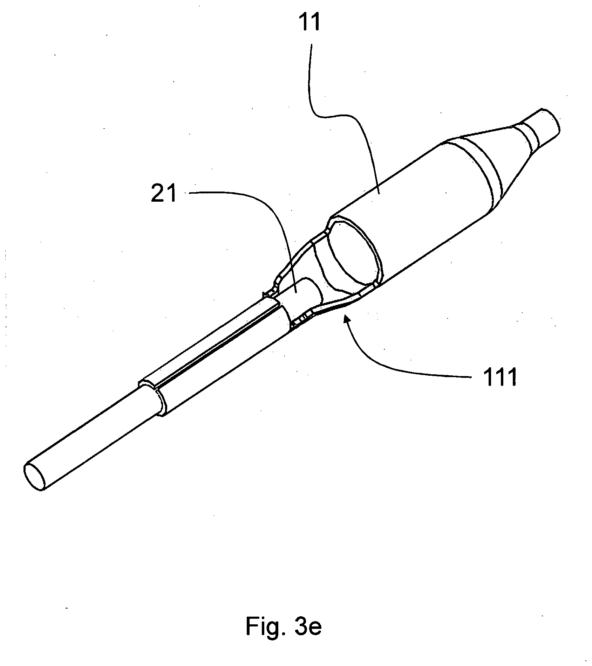

Figures 3d and 3e show two further specific arrangements for the connection between the transmission conductor 21 and conductor element 11.

It results how also the transmission conductor 21 is connectable with the corresponding conductor element 11 according to one of the methods described above.

With a particular reference to figures 3d and 3e the conductor element 11 has a terminal portion 111 that can be made according to the arrangements of figures 3a to 3c.

Particularly in figures 3d and 3e the terminal portion 111 completely surrounds the external surface of the transmission conductor 11.

It is specified that in figures 3d and 3e the conductor element 11 is made in the form of a tubular body, as described above.

Moreover figures 3d and 3e show how the terminal portion 111 can be used for connecting the transmission conductor 21 to the conductor element 11, directly to the element itself, figure 3e, or through a supporting body 112 welded to the conductor element 11, figure 3d.

## Claims

1. Thermocouple for controlling the opening of a valve of a gas cock, comprising
a first conductor element (11) and a second conductor element (12), which first and second conductor elements are brought in electrically conductive contact at one detecting end (13), so called hot junction, obtained by joining a terminal of said first conductor element (11) with a corresponding terminal of said second conductor element (12), such to generate at the two free ends of each conductor element, so called cold junction, a potential difference that is a function of the temperature detected at the detecting end (13),
the free ends of each one of said two conductor elements being connected each one to one corresponding transmission conductor (21,22), a first and a second transmission conductor respectively, for transmitting the electrical signal generated by the potential difference to an electromagnet,
wherein at least one of the two transmission conductors (21, 22) is made of aluminium;
**characterized in that** said at least one transmission conductor (21, 22) made of aluminium is fastened to the corresponding conductor element by fastening means composed of a chemical-physical connection and a mechanical connection;
and said mechanical connection is a form fit and
wherein the free end of at least one of the two conductor elements (11, 12) has a housing seat for the connection with the terminal of the corresponding transmission conductor (21, 22) or vice versa and the housing seat is composed of a surface having a section complementary, at least partially, with the section of the terminal of the corresponding transmission conductor (21, 22).

2. Thermocouple according to claim 1, wherein both the transmission conductors (21, 22) are made of aluminium.

3. Method for making a thermocouple as defined in claim 1 or claim 2, **characterized in that** the free end of at least one of the two conductor elements is welded to the end of the corresponding transmission conductor made of aluminium by ultrasonic welding.

4. Method for making a thermocouple as defined in claim 1 or claim 2 **characterized in that** the free end of at least one of the two conductor elements is welded to the end of the corresponding transmission conductor made of aluminium by magnetic pulse welding.

5. Method for making a thermocouple as defined in claim 1 or claim 2 **characterized in that** the free end of at least one of the two conductor elements is welded to the end of the corresponding transmission conductor made of aluminium by laser welding.

## Patentansprüche

1. Thermoelement zur Steuerung der Öffnung eines Ventils eines Gashahnes, mit einem ersten Leiterelement (11) und einem zweiten Leiterelement (12), wobei das erste und das zweite Leiterelement an einem Detektionsende (13), die so genannte Heissstelle, in elektrisch leitendem Kontakt gebracht sind, die durch Verbinden eines Anschlusses des ersten Leiterelements (11) mit einem entsprechenden Anschluss des zweiten Leiterelements (12) erhalten wird, so dass an den beiden freien Enden, die so genannte Kaltstelle, jedes Leiterelements eine Potentialdifferenz erzeugt wird, die eine Funktion der am Detektionsende (13) erfassten Temperatur ist, wobei die freien Enden jedes der beiden Leiterelemente jeweils mit einem entsprechenden Übertragungsleiter (21,22) verbunden sind, d.h. jeweils mit einem ersten und einem zweiten Übertragungsleiter zum Übertragen des von der Potentialdifferenz erzeugten elektrischen Signals an einen Elektromagneten, wobei mindestens einer der beiden Übertragungsleiter (21, 22) aus Aluminium besteht, **dadurch gekennzeichnet, dass** der mindestens eine Übertragungsleiter (21, 22) aus Aluminium durch aus einer chemisch-physikalischen Verbindung und einer mechanischen Verbindung bestehende Befestigungsmittel an dem entsprechenden Leiterelement befestigt ist und die mechanische Verbindung eine formschlüssige Verbindung ist und wobei das freie Ende mindestens eines der beiden Leiterelemente (11, 12) einen Gehäusesitz zur Verbindung mit dem Anschluss des entsprechenden Übertragungsleiters (21, 22) oder umgekehrt aufweist und der Gehäusesitz aus einer Oberfläche mit einem zumindest teilweise komplementären Abschnitt mit dem Abschnitt des Anschlusses des entsprechenden Übertragungsleiters (21, 22) besteht.

2. Thermoelement nach Anspruch 1, **dadurch gekennzeichnet, dass** beide Übertragungsleiter (21, 22) aus Aluminium bestehen.

3. Verfahren zur Herstellung eines Thermoelements nach Anspruch 1 oder 2, **dadurch gekennzeichnet, dass** das freie Ende mindestens eines der beiden Leiterelemente mit dem Ende des entsprechenden Übertragungsleiters aus Aluminium durch Ultraschallschweißen verschweißt wird.

4. Verfahren zur Herstellung eines Thermoelements nach Anspruch 1 oder 2, **dadurch gekennzeichnet, dass** das freie Ende mindestens eines der beiden Leiterelemente mit dem Ende des entsprechenden Übertragungsleiters aus Aluminium durch Magnetimpulsschweißen verschweißt wird.

5. Verfahren zur Herstellung eines Thermoelements nach Anspruch 1 oder 2, **dadurch gekennzeichnet, dass** das freie Ende mindestens eines der beiden Leiterelemente mit dem Ende des entsprechenden Übertragungsleiters aus Aluminium durch Laserschweißen verschweißt wird.

## Revendications

1. Thermocouple pour contrôler l'ouverture d'une vanne d'un robinet de gaz, comprenant
un premier élément conducteur (11) et un deuxième élément conducteur (12), les premier et deuxième éléments conducteurs étant menés en contact électriquement conducteur à une extrémité de détection (13), appelée soudure chaude, obtenue en joignant une borne dudit premier élément conducteur (11) à une borne correspondante dudit deuxième élément conducteur (12), de manière à générer aux deux extrémités libres de chaque élément conducteur, appelée soudure froide, une différence de potentiel qui est fonction de la température détectée au niveau de l'extrémité de détection (13),
les extrémités libres de chacun desdits deux éléments conducteurs étant connectées chacune à un conducteur de transmission correspondant (21,22), respectivement un premier et un deuxième conducteur de transmission, pour transmettre à un électro-aimant le signal électrique généré par la différence de potentiel,
dans lequel
au moins un des deux conducteurs de transmission (21, 22) est en aluminium;
**caractérisé en ce que**
ledit au moins un conducteur de transmission (21, 22) en aluminium est fixé à l'élément conducteur correspondant par des moyens de fixation constitués d'une liaison chimico-physique et d'une liaison mécanique; et ladite liaison mécanique est un couplage de forme et dans lequel l'extrémité libre d'au moins un des deux éléments conducteurs (11, 12) a un siège de logement pour la liaison avec la borne du conducteur de transmission correspondant (21, 22) ou vice versa et le siège de logement est constitué d'une surface ayant une section au moins partiellement complémentaire à la section de la borne du conducteur de transmission correspondant (21, 22).

2. Thermocouple selon la revendication 1, dans lequel les deux conducteurs de transmission (21, 22) sont en aluminium.

3. Procédé de fabrication d'un thermocouple selon la revendication 1 ou la revendication 2, **caractérisé en ce que**
l'extrémité libre d'au moins un des deux éléments conducteurs est soudée à l'extrémité du conducteur de transmission correspondant en aluminium par soudage aux ultrasons.

4. Procédé de fabrication d'un thermocouple selon la revendication 1 ou la revendication 2, **caractérisé en ce que** l'extrémité libre d'au moins un des deux éléments conducteurs est soudée à l'extrémité du conducteur de transmission correspondant en aluminium par soudage par impulsion magnétique.

5. Procédé de fabrication d'un thermocouple selon la revendication 1 ou la revendication 2, **caractérisé en ce que** l'extrémité libre d'au moins un des deux éléments conducteurs est soudée à l'extrémité du conducteur de transmission correspondant en aluminium par soudage au laser.
